# EUROPEAN PATENT SPECIFICATION

(11) **EP 1 609 595 B1**
(45) Date of publication and mention of the grant of the patent: **13.08.2008**
(21) Application number: 05012758.8
(22) Date of filing: 14.06.2005
(51) Int. Cl.: B32B 27/34, B32B 27/18, B32B 27/08, B65D 90/02, B60K 15/03

(54) **Multilayer container**
Mehrschichtiger Behälter
Récipient multicouche

(30) Priority: 24.06.2004 JP 2004186006
(43) Date of publication of application: 28.12.2005
(73) Proprietor: NISSAN MOTOR COMPANY LIMITED, Yokohama-shi Kanagawa 221-0023 (JP)
(72) Inventor: Shinoda, Atsuhiro, Isehara-shi Kanagawa 259-1114 (JP); Kumagai, Hiroshi, Yamato-shi Kanagawa 242-0024 (JP); Himeki, Hiroaki, Sagamihara-shi Kanagawa 228-0811 (JP)
(74) Representative: Schaeberle, Steffen

(56) References cited:
- EP-A- 0 626 256
- PATENT ABSTRACTS OF JAPAN vol. 1996, no. 09, 30 September 1996 (1996-09-30) -& JP 08 127089 A (UBE IND LTD; TOYOTA MOTOR CORP; TONEN CHEM CORP), 21 May 1996 (1996-05-21)
- PATENT ABSTRACTS OF JAPAN vol. 017, no. 201 (M-1399), 20 April 1993 (1993-04-20) & JP 04 345824 A (TONEN CHEM CORP), 1 December 1992 (1992-12-01)

## Description

### BACKGROUND OF THE INVENTION

This invention relates to improvements in a multilayer container, and more particularly to a multilayer container having high impact resistance, high fuel impermeability, excellent hollow moldability, a high adhesion of mutually contacting layers and high recyclability of flash formed during hollow molding, while retaining satisfactory levels of other properties, too.

While metal and resin products are known as multilayer containers, a multilayer resin container has the advantages of having a freedom of shaping, being light in weight, allowing an improved fuel consumption, requiring only a small number of steps for its manufacture and being improved in recyclability. Accordingly, there has recently been a tendency toward an increase in the use and manufacture of multilayer resin containers. As multilayer containers, there are generally known one formed of monolayer polyethylene, and one formed of e.g. a multilayer hollow molded product having a polyamide resin layer or an ethylene vinyl alcohol layer as a barrier layer. Traditional multilayer containers have recently been required to have a lower degree of fuel impermeability to satisfy laws and regulations on exhaust gases in various countries, while retaining other properties, whether they may be monolayer or multilayer, and they have also been required to be formed of a more inexpensive material. Their fuel impermeability cannot be realized unless a considerably large thickness is given to polyethylene in the case of monolayer, or a polyamide resin layer in the case of multilayer. There is known an art of improving the fuel impermeability of a polyamide resin layer by dispersing phyllosilicate uniformly therein without increasing its thickness, as disclosed in Japanese Patent Provisional Publication No. (Hei) 8-127089.

[JP 08/127 089 A discloses a multilayer container, the laminated layers consisting of polyamide, high-density polyethylene and modified high density polyethylene, modified by unsaturated carboxylic acid or a derivative thereof. The polyamide layers contains 0,2-5 wt-% laminar silicate particles with a side length of 0,02-1,0µm.

EP 0 626 256 Al and JP 04/345 824 A disclose multilayered containers, yet without inorganic particles in the barrier layer.]

According to the above conventional technique, it has been a problem that the uniform dispersion of phyllosilicate lowers the impact resistance of a multilayer container seriously, though it improves its fuel impermeability. It has been another problem that its polyamide and modified polyethylene layers have their adhesive strength lowered. It has also been a problem that its impact resistance is greatly lowered during the recycling of flashes formed during its hollow molding.

### BRIEF SUMMARY OF THE INVENTION

Therefore, it is an object of the present invention to provide an improved multiplayer container which can effectively overcome drawbacks encountered in conventional multiplayer containers of the similar nature.

Another object of the present invention is to provide an improved multiplayer container which is excellent in fuel impermeability and impact resistance while being able to be suitably recycled.

According to the present invention, a multilayer container comprises a polyamide layer whose main component is polyamide. A polyethylene layer whose main component is polyethylene is provided. Additionally, a modified polyethylene layer whose main component is polyethylene is provided. The modified polyethylene layer is formed of polyethylene modified with at least one of an unsaturated carboxylic acid or a derivative of an unsaturated carboxylic acid. In the above multilayer container, the polyamide layer, the polyethylene layer and the modified polyethylene layer are laminated to form a laminate structure. The polyamide layer is formed of a polyamide resin or a resin mixture containing a polyamide resin, the polyamide layer containing an inorganic compound in the form of spherical particles having an average particle diameter of 150 nm or less, in an amount of not larger than 0.2 part by weight relative to 100 parts by weight of the polyamide resin or the resin mixture.

### DETAILED DESCRIPTION OF THE INVENTION

A multilayer container according to this invention will now be discussed in detail. In the specification, % represents a "percentage (%) by mass or weight" unless otherwise noted.

The multilayer container according to this invention is a multilayer container formed of three or more layers, and is made by laminating a polyamide layer, a polyethylene layer and a polyethylene layer modified by an unsaturated carboxylic acid or a derivative of an unsaturated carboxylic acid. The polyamide layer contains 0.2 parts by weight or less of an inorganic compound having in the form of spherical particles an average particle diameter or size of 150 nm or less, relative to 100 parts by weight of a polyamide resin or a resin mixture containing a polyamide resin.

Such a composition as described above makes the multilayer container outstanding in fuel impermeability and recyclability and in impact resistance, too, since the polyamide layer does not become rigid.

If the inorganic compound exceeds 0.2 parts by weight, the amide group at the end of the polyamide resin has a larger deactivation number lowering the strength of its adhesion to the modified polyethylene layer and thereby lowering the impact resistance of the multilayer container. It is also feared that if the unnecessary part (so-called flash) occurring from the molding (particularly blow molding) of the multilayer container is wholly or partly mixed in the polyethylene layer (recycled), its low strength of adhesion to the modified polyethylene may lower the physical properties of the container into which the recycled material has been mixed, particularly its impact resistance.

Description will now be made on the polyethylene layer.

The polyethylene layer is typically formed as the innermost layer contacting fuel, or the outermost layer contacting the air, though it may alternatively be positioned in any other location.

If one or both of the innermost and outermost layers are polyethylene layers, the flash occurring from their molding can be used as the polyethylene material for molding the polyethylene layer of another multilayer container, or as a part of such material. In other words, such flash can be used to compose 0 to 100% of a polyethylene layer. Thus, while a material not containing any flash can, of course, be used, the flash itself (a material consisting 100% of flash) can be used as a material for a polyethylene layer, too, and even in such an event, it satisfies the properties required of a multilayer container, such as impact resistance and fuel impermeability, and gives a container the full characteristics of a resinous multilayer container, such as a light weight and a freedom of shaping. Although the inclusion of a recycled material, such as flash, is typically done for a polyethylene layer forming the innermost or outermost layer, it is possible for any other part if a polyethylene layer is to exist as any such part.

In the event that the polyethylene layer is used as another layer not forming the innermost or outermost layer, it is desirable in view of its gasoline resistance to use a material (for a polyethylene layer) having an average molecular weight of about 200,000 to about 1,000,000. It is more desirable to use a material (for a polyethylene layer) having an average molecular weight of 200,000 to 500,000. It is not always necessary to use the same material as the polyethylene resin forming the innermost or outermost layer, but it is possible to use a different material as properly required. The use of such a polyethylene layer makes it possible to achieve usually a cold embrittlement temperature of -80°C or less and thereby an improved cold impact resistance.

Description will now be made on the polyamide layer.

The polyamide layer functions as a fuel permeation suppressing layer for the multilayer container and preferably has an average thickness of from 40 to 450 µm, more preferably from 40 to 200 µm. If its average thickness is less than 40 µm, its fuel impermeability is greatly lowered, and when it is formed by e.g. blow molding, the polyamide layer has its thickness reduced and becomes more likely to be broken. If its average thickness exceeds 450 µm, the polyamide resin, which is rigid as compared with polyethylene, lowers the impact resistance required of the multilayer container and when the flash is recycled, the dispersion of the polyamide layer having a large thickness requires such a large shearing force that the heat of shearing raises a temperature for recycling treatment and causes the deterioration or crosslinking of polyethylene. This lowers the impact resistance of the multilayer container or altering the melt viscosity of polyethylene for the principal layer during its blow molding, thereby making it difficult to obtain any reliable multilayer container.

The polyamide layer contains 0.2 parts by weight or less of an inorganic compound in the form of spherical particles having an average particle diameter of 150 nm or less, relative to 100 parts by weight of a polyamide resin, or a resin mixture containing the polyamide resin. The inorganic compound more preferably has an average particle diameter of 45 nm or less. Its proportion is preferably from 0.01 to 0.1 part by weight. There is no improved fuel impermeability unless any such inorganic compound is mixed.

If the inorganic compound has an average particle diameter exceeding 150 nm, there is obtained a rigid polyamide layer lowering the impact resistance of the multilayer container. If the proportion of the inorganic compound exceeds 0.2 parts by weight, there is obtained a rigid polyamide layer lowering the impact resistance of the multilayer container seriously and the polyamide layer also has a lower strength of adhesion to the modified polyethylene layer, thereby lowering the impact resistance of the multilayer container.

As examples of the polyamide resin, it is possible to mention polymers made by polymerizing monomers including ε-caprolactam, 6-aminocaproic acid, ω-enantholactam, 7-aminoheptanoic acid, α-pyrrolidone, α-piperidone, 11-aminoundecanoic acid, undecanelactam, 12-aminododecanoic acid and dodecalactam, or diamines such as hexamethylenediamine, nonamethylenediamine, undecamethylenediamine and dodecamethylenediamine, with dicarboxylic acids such as terephthalic acid, isophthalic acid, adipic acid and sebacic acid, and having acid-amide bonds (-CONH-).

It is possible to add to the polyamide resin or the resin mixture an appropriate amount of any of a heat stabilizer, a plasticizer, an oxidation inhibitor, an aging inhibitor, a dye, a pigment, a flame retardant, etc. as required. When the flash occurring from blow molding as stated before is recycled by kneading in a kneading machine in a way making a polymer alloy, the heat of shearing is likely to raise the resin temperature, since polyethylene has a very high melt viscosity. In such an event, a processing stabilizer may be added, depending on the circumstances. As the processing stabilizer, it will be effective to add, for example, two parts by weight or less of one or both of a copper-based processing stabilizer, a hindered phenol-based oxidation inhibitor and a phosphorus-based processing stabilizer. The addition of over two parts by weight of the processing stabilizer cannot be expected to produce any better result, but is rather undesirable as it lowers the toughness of the resin.

The inorganic compound to be added to the polyamide layer has to be a component which can greatly improve the fuel impermeability of the polyamide layer and thereby of the multilayer container. Therefore, the inorganic compound is required to have an average particle diameter of 150 nm or less. It is also preferable for the inorganic compound to be uniformly dispersible in the polyamide resin or the resin mixture.

Specific examples of the inorganic compounds which can be employed are titanium oxide, titanium dioxide, zinc oxide, clay, aluminum oxide, iron oxide, carbon black, bentonite, montmorillonite, as well as any combination, thereof Titanium oxide, titanium dioxide, zinc oxide, clay, aluminum oxide or montmorillonite or any combination thereof is, among others, preferred because of their reasonable price and easy availability. They may be either natural or synthetic.

Description will now be made on the modified polyethylene layer.

The modified polyethylene layer is composed of polyethylene modified with an unsaturated carboxylic acid or a derivative of the unsaturated carboxylic acid. The modified polyethylene is used to impart adhesiveness to (reactivity with) the polyamide and has the property of adhering to both the polyethylene and the polyamide.

The modified polyethylene preferably has a density of 0.935 g/cm³ or less. If its density exceeds 0.935 g/cm³, the modified polyethylene layer may become so rigid as to lower the impact resistance of the multilayer container seriously.

Because of its property as mentioned above, it is desirable to dispose the modified polyethylene layer between the polyethylene and polyamide layers. It is also desirable for the modified polyethylene layer to be present on both sides of the polyamide layer and have a thickness 0.1 or more times as large as that of the polyamide layer. This is the thickness required of any portion of the modified polyethylene layer contacting the polyamide layer even if any unevenness in thickness may arise from a difference in the degree of thickness reduction during blow molding.

The following can be mentioned as the reason for which the thickness mentioned above is desirable.

While the modified polyethylene layer functions to bond the polyethylene and polyamide layers together, it also functions between the polyethylene and polyamide not having any affinity for each other, like a compatibilizer or compatibility imparting agent in a polymer alloy, when the polyamide is dispersed in the polyethylene for the recycling of flash as stated before. Therefore, if the modified polyethylene layer does not have a thickness 0.1 or more times as large as that of the polyamide layer, it is not sufficient in quantity as a compatibility imparting agent for the recycling of flash and the polyamide is difficult to disperse in the polyethylene in a stable way. As a result, the multilayer container obtained by recycling flash has its properties lowered seriously, particularly in impact resistance.

It is desirable for the modified polyethylene forming the modified polyethylene layer to have a modification degree of 0.1 to 5%, based on the polyethylene yet to be modified, in view of the adhesiveness (reactivity) imparted by its modification and the function of the modified polyethylene as a compatibility imparting agent. If its modification degree is lower than 0.1%, it fails to adhere to (react with) the polyamide satisfactorily and is, therefore, likely to lower the impact resistance of the multilayer container. The increase in amount of the polyamide relative to the flash to be recycled makes the polyamide difficult to disperse in polyethylene and makes recycling difficult, and a multilayer container obtained by recycling is likely to be of low impact resistance. A modification degree exceeding 5% cannot be expected to produce any better result, but gives modified polyethylene of lower toughness which is likely to give a multilayer container of lower impact resistance.

Examples of the unsaturated carboxylic acids or derivatives thereof that can be used for modifying polyethylene are monocarboxylic acids such as acrylic and methacrylic acids, dicarboxylic acids such as maleic acid, fumaric acid and itaconic acid, and dicarboxylic anhydrides such as maleic anhydride, itaconic anhydride and endic anhydride (himic anhydride), and dicarboxylic acids or anhydrides thereof are, among others, preferred.

A known method, such as a melt-kneading method or a solution method, can be mentioned as a method of modifying polyethylene. In the case of a melt-kneading method, polyethylene, an unsaturated carboxylic acid (or an anhydride thereof) used for modifying it and a catalyst are charged into e.g. an extruder or a twin-screw kneader and are kneaded together, while they are melted by heating to a temperature of 150°C to 250°C. In the case of a solution method, the above substances are dissolved in an organic solvent, such as xylene, and the solution is stirred at a temperature of 80°C to 140°C, whereby polyethylene is modified. In either case, it is possible to use an ordinary radical polymerization catalyst as the catalyst, and it is preferable to use, for example, a peroxide such as benzoyl peroxide, lauroyl peroxide, di-tert-butyl peroxide, acetyl peroxide, tert-butylperoxy- benzoic acid, dicumyl peroxide, peroxyacetic acid, tert-butylperoxypivalate or 2,5-dimethyl-2, 5-di-tert-butyl- peroxyhexyne, or a diazo compound such as azobisisobutylnitrile. The amount of the catalyst to be added is preferably from 1 to 100 parts by weight for 100 parts by weight of the unsaturated carboxylic acid or anhydride thereof for modification.

Description will now be made on the multilayer container obtained by laminating the polyethylene, polyamide and modified polyethylene layers on one another.

The multilayer container as a whole preferably has a wall thickness 10 or more times as large as that of the polyamide layer. When the polyethylene layer giving impact resistance to the multilayer container has a thickness about 10 or more times as large as that of the polyamide layer, the multilayer container has a satisfactory impact resistance, the polyamide is easily dispersible when flash is recycled, and the multilayer container made by recycling flash has practically satisfactory properties, particularly in impact resistance. If its wall thickness is less than 10 times, the polyamide layer has too large thickness for the wall thickness of the multilayer container as a whole and the polyamide which is more rigid than polyethylene is likely to exert an adverse effect to lower the impact resistance of the multilayer container. When flash is recycled, the increase in amount of the polyamide lowers its dispersibility in the polyethylene and is likely to lower the impact resistance of the multilayer container made by recycling.

When the polyethylene layer contains flash, i.e. when it is composed of flash alone, or flash and polyethylene, the flash is likely to contain polyamide. When such resins, which are incompatible with each other, are kneaded together, they undergo phase separation into a component forming a continuous layer (sea component) and a component forming a discontinuous layer (island component) and the dispersible particle diameter of the resin forming the island component (i.e. polyamide) is affected by various factors including the ratio in density between the components and in viscosity, their surface tension, their interaction strength and an external mechanical force.

The structural ratio of the laminated layers of the multilayer container according to this invention can be calculated from their ratio in thickness, and more specifically, it is desirable to control the dispersed particle diameter of the polyamide in the flash forming the polyethylene layer to a level of 50 µm or less. If the dispersed particle diameter of the polyamide exceeds 50 µm, recycled flash gives a multilayer container which is particularly low in impact resistance.

It is easy to form a state in which the polyamide has the dispersed particle diameter mentioned above, by giving some external mechanical force (a shearing force given by a kneader, or by a screw during blow molding) when recycling flash. For recycling flash, however, any method can be employed without any particular limitation. There are, for example, a method in which a polyamide-dispersed resin is prepared from a crushed product of flash in a kneader and is blended with virgin or new polyethylene to make a blow molding composition, and a method in which a crushed product of flash and virgin polyethylene are blended directly in a blow molding machine having a strong kneading screw prior to blow molding.

For manufacturing the multilayer container, any known method, such as hollow molding, can be selectively employed without any particular limitation. There is, for example, a method in which molten resins extruded from extruders corresponding to the number of layers to be formed, or the number of materials employed are introduced into a single multilayer hollow molding die and bonded together in the die or immediately after leaving it, followed by an ordinary hollow molding method.

Although the reason for the outstanding fuel impermeability of the multilayer container according to this invention has been not yet clear now, it is assumed that the passage of fuel may be obstructed by the combination of two factors, i.e., an improved crystallinity realized by the inorganic compound having an average particle diameter of 150 µm or less in the polyamide layer and forming nuclei for crystallization, and the selective permeability of the polyethylene and the nylon containing the inorganic particles. It is also assumed that its good impact resistance may be due to the amount of the inorganic compound staying within 0.2 parts by weight, in which the inorganic compound does not act as foreign matter, does not make the polyamide resin rigid or lower its physical properties, and does not lower its adhesion to the modified polyethylene layer.

### EXAMPLES

The present invention will be more readily understood with reference to the following Examples in comparison with Comparative Examples; however, these Examples are intended to illustrate the invention and are not to be construed to limit the scope of the invention.

### EXAMPLE 1

Resinous materials to be used for the multilayer structure of a multilayer container were prepared as described below.

### [Polyamide Resin Mixture]

10 kg of ε-caprolactam were stirred at 100°C in a reactor having a stirring blade until a uniform reaction system was formed. Then, the temperature was raised to 260°C and stirring was continued for at least an hour under application of a pressure of 15 kg/cm². Then, the application of pressure was discontinued, and the reaction was continued for three hours at normal pressure, while water was removed by volatilization. After the termination of the reaction, a reaction product was collected in a strand form through the bottom nozzle of the reactor, was water cooled and was cut to give pellets of a polyamide-6 resin having an average molecular weight of 32,000.

After the pellets had been dipped in hot water and the unreacted monomer (about 10%) had been removed by extraction, they were dried in a vacuum to give a polyamide resin to be used as an adhesive layer according to this invention.

A polyamide resin mixture was obtained by kneading 10 kg of the polyamide resin obtained above and 10 g of titanium dioxide having an average particle diameter of 15 nm in a twin-screw extruder.

### [Polyethylene (PE) and Modified Polyethylene]

Polyethylene having an MI of 4.4 was prepared as PE forming the outer and inner layers of a multilayer container, and modified PE obtained by modifying 100 parts by weight of PE with 0.5 parts by weight of maleic anhydride and having a specific gravity of 0.935 g/cm³ was prepared for an adhesive layer between the PE and polyamide layers.

Then, a multilayer container was manufactured by using the resinous materials described above. More specifically, a multilayer container having a three-material five-layer structure formed by PE (outer layer), modified PE (adhesive layer), polyamide resin composition (barrier layer), modified PE (adhesive layer) and PE (inner layer) was made by molding in a three-material five-layer blow molding machine. The multilayer container had an average barrier layer thickness of 100 µm, an adhesive layer thickness of 100 µm as large as that and an average overall wall thickness of 6,000 µm including the thickness of the PE layers, which was 60 times as large as that of the barrier layer, and it measured 1, 100 mm by 600 mm by 200 mm and had a volume of 70 liters. The multilayer containers as obtained were tested for their properties, as follows:

### (1) Cold impact resistance (Non-breakable height):

A multilayer container as obtained was loaded with 40 liters of ethylene glycol, was tightly closed, was left to stand in an atmosphere having a temperature of -40°C for at least 72 hours and was thereafter removed therefrom. The container was allowed to drop vertically from a height of 6 m for its evaluation with respect to cracking or deformation. If no cracking or deformation occurred at all, another multilayer container was tested from a height raised every 0.5 m, and every container was evaluated as A when its cracking or deformation height was 10 m or more, as B when it was less than 10 m, and as C when it was less than 8 m. The results are shown in Table 1.

### (2) Fuel impermeability:

A multilayer container was loaded with 30 liters of gasoline, was tightly closed, was left to stand in a nitrogen atmosphere having a temperature of 40°C for 30, 60 or 90 days and was examined for fuel permeation by using a SHED (Sealed Housing for Evaporative Detection) under the conditions as stipulated by CARB (California Air Resources Board). Every container was evaluated as A when its fuel permeation was less than a half of that of a container having a barrier layer formed from polyamide alone, and as C when it was a half or more. The results are shown in Table 1.

### (3) Recyclability of flash:

The flash which had been formed during the molding of the multilayer container was crushed, and was melted and kneaded in a unidirectional twin-screw kneader and a mixture was made by mixing 50% of flash and 50% of PE. Multilayer containers were molded by using the resin mixture as obtained as a material for the outermost and innermost layers thereof instead of PE. The recycled multilayer containers as obtained were evaluated for (i) the dispersion of the polyamide resin composition in PE and (ii) their cold impact resistance.
(i) The dispersion of the polyamide resin composition was examined by dyeing a cross-sectional surface of each container with a polyamide dye solution (Kayanol Colours (trade name) of Nippon Kayaku Co. , Ltd.) and observing through a magnifying lens the dyed polyamide resin composition in its outer and inner PE layers. Every container was evaluated as A when no specific aggregation of dispersed particles was found, and as C when such aggregation was found. The results are shown in Table 1.
(ii) The cold impact resistance was tested as set forth at (1) above. The results are shown in Table 1.

In the following Examples and Comparative Examples, the evaluation of any recycled multilayer container for cold impact resistance was made on every multilayer container having the same layer structure as the products of Example 1. This was to avoid the influence of any difference in layer structure on the evaluation for recyclability.

### EXAMPLE 2

A procedure of Example 1 was repeated with the exception that 5 g of titanium dioxide having an average particle diameter of 15 nm was used instead of 10 g of titanium dioxide having an average particle diameter of 15 nm in Example 1, thereby producing a multilayer container. The results are shown in Table 1.

### EXAMPLE 3

A procedure of Example 1 was repeated with the exception that 10 kg of ε- caprolactam, 0.9 kg of adipic acid and 2 kg of water were used to prepare a polyamide resin mixture, thereby producing a multiplayer container. The results are shown in Table 1.

### EXAMPLE 4

A procedure of Example 1 was repeated with the exception that titanium dioxide having an average particle diameter of 140 nm was used instead of titanium dioxide having an average particle diameter of 15 nm in Example 1, thereby producing a multiplayer container. The results are shown in Table 1.

### EXAMPLE 5

A procedure of Example 1 was repeated with the exception that zinc oxide having an average particle diameter of 15 nm was used instead of titanium dioxide having an average particle diameter of 15 nm in Example 1, thereby producing a multiplayer container. The results are shown in Table 1.

### EXAMPLE 6

A procedure of Example 3 was repeated with the exception that zinc oxide having an average particle diameter of 15 nm was used instead of titanium dioxide having an average particle diameter of 15 nm in Example 3 and otherwise repeating Example 1. The results are shown in Table 1.

### EXAMPLE 7

A procedure of Example 3 was repeated with the exception that zinc oxide having an average particle diameter of 95 nm was used instead of titanium dioxide having an average particle diameter of 15 nm of Example 3, thereby producing a multiplayer container. The results are shown in Table 1.

### EXAMPLE 8

A procedure of Example 1 was repeated with the exception that 15 g of titanium dioxide having an average particle diameter of 15 nm was used instead of 10 g of titanium dioxide having an average particle diameter of 15 nm in Example 1, thereby producing a multiplayer container. The results are shown in Table 2.

### COMPARATIVE EXAMPLE 1

A procedure of Example 1 was repeated with the exception that a polyamide resin mixture of Example 3 was prepared by polymerization without adding any inorganic compound, thereby producing a multiplayer container. The results are shown in Table 2.

### COMPARATIVE EXAMPLE 2

A procedure of Example 1 was repeated with the exception that a polyamide resin mixture of Example 1 was prepared by polymerization without adding any inorganic compound, thereby producing a multiplayer container. The results are shown in Table 2.

### COMPARATIVE EXAMPLE 3

A procedure of Example 1 was repeated with the exception that 100 g of titanium dioxide having an average particle diameter of 15 nm was used instead of 10 g of titanium dioxide having an average particle diameter of 15 nm in Example 1, thereby producing a multiplayer container. The results are shown in Table 2.

### COMPARATIVE EXAMPLE 4

A multilayer container was made by using 300 g of titanium dioxide having an average particle diameter of 15 nm of Example 1 instead of 10 g and otherwise repeating Example 1. The results are shown in Table 2.

### COMPARATIVE EXAMPLE 5

A procedure of Example 1 was repeated with the exception that titanium dioxide having an average particle diameter of 500 nm was used instead of titanium dioxide having an average particle diameter of 15 nm in Example 1, thereby producing a multiplayer container. The results are shown in Table 2.

### COMPARATIVE EXAMPLE 6

A procedure of Example 1 was repeated with the exception that a polyamide resin mixture of Example 1 was prepared by polymerization without adding any inorganic compound, employing modified polyethylene of Example 1 having a density of 0.955 g/cm³ , thereby producing a multiplayer container. The results are shown in Table 2.

**Table 1**

| | | | Example 1 | Example 2 | Example 3 | Example 4 | Example 5 | Example 6 | Example 7 |
|---|---|---|---|---|---|---|---|---|---|
| Barrier layer | Polyamide resin | | Polyamide 6 | Polyamide 6 | Polyamide 6/66 | Polyamide 6 | Polyamide 6 | Polyamide 6/66 | Polyamide 6/66 |
| | Spherical particles | Kind | Titanium dioxide | Titanium dioxide | Titanium dioxide | Titanium dioxide | Zinc oxide | Zinc oxide | Zinc oxide |
| | | Diameter | 15 nm | 15 nm | 15 nm | 140 nm | 15 nm | 15 nm | 95 nm |
| | | Amount (Parts by Weight) | 0.1 | 0.05 | 0.1 | 0.1 | 0.1 | 0.1 | 0.1 |
| Adhesive layer | Modifier | Kind | Maleic anhydride | Maleic anhydride | Maleic anhydride | Maleic anhydride | Maleic anhydride | Maleic anhydride | Maleic anhydride |
| | | Density | 0.933 | 0.933 | 0.933 | 0.933 | 0.933 | 0.933 | 0.933 |
| Multilayer container layer structure | Average thickness of barrier layer (µm) | | 100 | | | | | | |
| | Average thickness of adhesive layer (µm) | | 100 | | | | | | |
| | Overall wall Thickness (µm) | | 6000 | | | | | | |
| Cold impact resistance *1 | | | A | A | A | A | A | A | A |
| Fuel impermeability *2 | | | A | A | A | A | A | A | A |
| Recyclability | Dispersion of PA6 in outer and inner layers of HD(high density)PE *3 | | A (50% recycled) | A (50% recycled) | A (50% recycled) | A (50% recycled) | A (50% recycled) | A (50% recycled) | A (50% recycled) |
| | Cold impact resistance *1 | | A (50% recycled) | A (50% recycled) | A (50% recycled) | A (50% recycled) | A (50% recycled) | A (50% recycled) | A (50% recycled) |

| | | | | | | | | | |
|---|---|---|---|---|---|---|---|---|---|
| *1 -Cold impact resistance-A: when cracking or deformation was occurred with a test (cracking or deformation) height of 10 m or more; B: when cracking or deformation was occurred with the test height from 8 m to less than 10 m; and C: when cracking or deformation was occurred with the test height of less than 8 m. *2 -Fuel impermeabifity-A: when fuel permeation was less than a half of that of a container having its barrier layer formed from polyamide alone; and C: when fuel permeation was a half or more. *3 -Dispersion of polyamide 6 (PA6) in outer and inner layers of HDPE-A: when dispersion was good; and C: when an aggregation of dispersed particles was found. | | | | | | | | | |

**Table 2**

| | | | Example 8 | Comparative Ex.1 | Comparative Ex.2 | Comparative Ex.3 | Comparative Ex.4 | Comparative Ex.5 | Comparative Ex.6 |
|---|---|---|---|---|---|---|---|---|---|
| Barrier layer | Polyamide resin | | Polyamide 6 | Polyamide 6/66 | Polyamide 6 | Polyamide 6 | Polyamide 6 | Polyamide 6 | Polyamide 6 |
| | Spherical particles | Kind | Titanium dioxide | - | - | Titanium dioxide | Titanium dioxide | Titanium dioxide | - |
| | | Diameter | 15 nm | - | - | 15 nm | 15 nm | 500 nm | - |
| | | Amount (Parts by Weight) | 0.15 | - | - | 1 | 3 | 0.1 | - |
| Adhesive layer | Modifier | Kind | Maleic anhydride | Maleic anhydride | Maleic anhydride | Maleic anhydride | Maleic anhydride | Maleic anhydride | Maleic anhydride |
| | | Density | 0.933 | 0.933 | 0.933 | 0.933 | 0.933 | 0.933 | 0.955 |
| Multilayer container layer structure | Average thickness of barrier layer (µm) | | 100 | | | | | | |
| | Average thickness of adhesive layer (µm) | | 100 | | | | | | |
| | Overall wall Thickness (µm) | | 6000 | | | | | | |
| Cold impact resistance*1 | | | A | A | A | C | C | C | B |
| Fuel impermeability*2 | | | A | C | C | A | A | A | C |
| Recyclability | Dispersion of PA6 in outer and inner layers of HDPE *3 | | A (50% recycled) | A (50% recycled) | A (50% recycled) | C (50% recycled) | C (50% recycled) | C (50% recycled) | A (50% recycled) |
| | Cold impact resistance*1 | | A (50% recycled) | A (50% recycled) | A (50% recycled) | C (50% recycled) | C (50% recycled) | C (50% recycled) | A (50% recycled) |

| | | | | | | | | | |
|---|---|---|---|---|---|---|---|---|---|
| *1 -Cold impact resistance-A: when cracking or deformation was occurred with a test (cracking or deformation) height of 10 m or more; B: when cracking or deformation was occurred with the test height from 8 m to less than 10 m; and C: when cracking or deformation was occurred with the test height of less than 8 m. *2 -Fuel impermeability-A: when fuel permeation was less than a half of that of a container having its barrier layer formed from polyamide alone; and C: when fuel permeation was a half or more. *3 -Dispersion of polyamide 6 (PA6) in outer and inner layers of HDPE-A: when dispersion was good; and C: when an aggregation of dispersed particles was found. | | | | | | | | | |

It will be apparent from Tables 1 and 2 that the multilayer containers according to Examples 1 to 8 are excellent in all of cold impact resistance, fuel impermeability and recyclability, since the polyamide layer as a barrier layer contains 0.2 parts by weight or less of an inorganic compound having an average particle diameter of 150 nm or less.

As appreciated from the above, according to this invention, the multilayer container is constituted of the polyamide layer, the polyethylene layer and the modified polyethylene layer which are laminated to form a laminate structure. 0.2 part by weight or less of an inorganic compound having an average particle diameter of 150 nm or less is added to the polyamide layer serving as a barrier layer. This makes it possible to provide the multilayer container which is excellent in fuel impermeability and in impact resistance, too, as its polyamide layer does not become rigid, and which can be recycled in a desirable way.

Although the invention has been described above by reference to certain embodiments and examples of the invention, the invention is not limited to the embodiments and examples described above. Modifications and variations of the embodiments and examples described above will occur to those skilled in the art, in light of the above teachings. The scope of the invention is defined with reference to the following claims.

## Claims

1. A multilayer container comprising:
A polyamide layer whose main component is polyamide;
A polyethylene layer whose main component is polyethylene; and
A modified polyethylene layer whose main component is polyethylene, the modified polyethylene layer being formed of polyethylene modified with at least one of an unsaturated carboxylic acid or a derivative of an unsaturated carboxylic acid,
Wherein the polyamide layer, the polyethylene layer and the modified polyethylene layer are laminated to form a laminate structure,
Wherein the polyamide layer is formed of a polyamide resin or a resin mixture containing a polyamide resin, the polyamide layer containing an inorganic compound in the form of spherical particles with an average particle diameter of 150nm or less, in an amount of not larger than 0.20 part by weight relative to 100 parts by weight of the polyamide resin or the resin mixture.

2. A multilayer container as claimed in claim 1, wherein the modified polyethylene layer has a density of 0.935 g/cm³ or less.

3. A multilayer container as claimed in claim 1 or 2, wherein the inorganic compound is at least one selected from the group consisting of titanium oxide, titanium dioxide, zinc oxide, clay, aluminum oxide, iron oxide, carbon black, bentonite and montmorillonite.

## Patentansprüche

1. Mehrschicht-Behälter:
- mit einer Polyamidschicht, deren Hauptbestandteil Polyamid ist;
- mit einer Polyethylenschicht, deren Hauptbestandteil Polyethylen ist; und
- mit einer modifizierten Polyethylenschicht, deren Hauptbestandteil Polyethylen ist, wobei das modifizierte Polyethylen aus Polyethylen ausgebildet ist, das mit zumindest einer ungesättigten Carbonsäure oder einem Derivat einer ungesättigten Carbonsäure modifiziert ist,
wobei die Polyamidschicht, die Polyethylenschicht und die modifizierte Polyethylenschicht geschichtet sind, um einen geschichteten Aufbau zu bilden,
wobei die Polyamidschicht aus einem Polyamidharz oder einer Harzmischung ausgebildet ist, die ein Polyamidharz enthält, wobei die Polyamidschicht eine anorganische Verbindung in Form von kugelförmigen Partikeln mit einem durchschnittlichen Partikeldurchmesser von 150nm oder weniger in einer Menge von nicht mehr als 0,20 Gewichtsanteilen des Polyamidharzes oder der Harzmischung enthält.

2. Mehrschicht-Behälter nach Anspruch 1, wobei die modifizierte Polyethylenschicht eine Dichte von 0,935 g/cm³ oder weniger aufweist.

3. Mehrschicht-Behälter nach Anspruch 1 oder 2, wobei die anorganische Verbindung zumindest eine ist, die aus der Gruppe bestehend aus Titanoxyd, Titandioxyd, Zinkoxyd, Ton, Aluminiumoxyd, Eisenoxyd, Carbon Black, Bentonit und Montmorillonit ausgewählt ist.

## Revendications

1. Récipient multicouche comprenant :
une couche de polyamide dont le principal composant est le polyamide ;
une couche de polyéthylène dont le principal composant est le polyéthylène ; et
une couche de polyéthylène modifié dont le principal composant est le polyéthylène, la couche de polyéthylène modifié étant formée de polyéthylène modifié avec au moins un acide carboxylique insaturé ou un dérivé d'un acide carboxylique insaturé,
dans lequel la couche de polyamide, la couche de polyéthylène et la couche de polyéthylène modifié sont laminées pour former une structure laminée,
dans lequel la couche de polyamide est constituée d'une résine de polyamide ou d'un mélange de résine contenant une résine de polyamide, la couche de polyamide contenant un composé inorganique sous forme de particules sphériques d'un diamètre moyen de 150 nm ou moins, en une quantité inférieure à 0,20 partie en poids par rapport à 100 parties en poids de la résine de polyamide ou du mélange de résine.

2. Récipient multicouche selon la revendication 1, dans lequel la couche de polyéthylène modifié a une densité de 0,935 g/cm³ ou moins.

3. Récipient multicouche selon la revendication 1 ou 2, dans lequel le composé inorganique est au moins un élément choisi dans le groupe constitué par l'oxyde de titane, le dioxyde de titane, l'oxyde de zinc, l'argile, l'oxyde d'aluminium, l'oxyde de fer, le noir de charbon, la bentonite et la montmorillonite.
